# EUROPEAN PATENT SPECIFICATION

(11) **EP 1 103 188 B1**
(45) Date of publication and mention of the grant of the patent: **02.05.2002**
(21) Application number: 00203725.7
(22) Date of filing: 26.10.2000
(51) Int. Cl.: A23G 1/21, A23G 3/02

(54) **System for production of shells of confectionery mass**
Vorrichtung zur Herstellung von Konfektschalen
Dispositif pour la fabrication de coques de confiserie

(30) Priority: 17.11.1999 EP 99203828
(43) Date of publication of application: 30.05.2001
(73) Proprietor: AASTED-MIKROVERK APS, 3520 Farum (DK)
(72) Inventor: Aasted, Lars, 2920 Charlottenlund (DK)
(74) Representative: Heiden, Finn

(56) References cited:
- DE-C- 386 084
- FR-A- 621 559
- FR-A- 2 437 790
- FR-A- 2 604 651
- FR-A- 2 764 779
- US-A- 1 771 065
- US-A- 5 635 230
- PATENT ABSTRACTS OF JAPAN vol. 005, no. 041 (C-047), 18 March 1981 (1981-03-18) & JP 55 165753 A (YOUKA MINON:KK), 24 December 1980 (1980-12-24)

## Description

The present invention concerns a mould-less system for the production of shells of confectionery masses in particular shells of chocolate-like masses.

### Prior art.

The traditional way of producing e.g. enrobed chocolate articles include the following steps:
Production of a solid centre, coating of the bottom with a bottom coater, cooling the bottom, enrobing and final cooling of the enrobed article in a tunnel cooler, whereby the article is cooled e.g. by convection or air-current cooling.

If a liquid or semi-liquid centre is wanted it is necessary to include invertase into the semi-solid fondant centre consisting of a solid phase of minute sucrose crystals dispersed in a syrup phase. After moulding of the bottom and after enrobing the invertase will gradually render the fondant creme liquid or semi-liquid due to the hydrolysis of sucrose.

The only way to make an article which is covered by particles such as puffed rice, desiccated coconut or similar ingredients is by dipping an enrobed product into the covering while the surface of the article is still liquid. This requires several steps in the production: lifting the still wet article, immersion in covering, release to the conveyor again. The result is damage to the surface of the shell an a low productivity.

In FR 2 437 790 (THURIES) a manual method for production of decorative elements of sugars, chocolate or similar substances is described. By this prior method, a metal tool is immersed into a liquid chocolate bath having a temperature between 30 and 60°C. This prior method is only adapted to provide the decorative elements with a predetermined interior surface, since the thickness of the decorative elements cannot be controlled. Furthermore, drops of chocolate will remain on the lower surface of the decorative elements as they are lifted from the chocolate bath.

Systems are also known that comprise a cooled male mould to be immersed into a basin containing liquid tempered chocolate. After lifting, excess chocolate is separated from the shells by vibration, whereafter the shells are deposited on a conveyor belt (Confection, June 1999, page 22). As the solidification takes place from the cooling member and outwards the outside of the shells will remain liquid and partly run down towards the bottom of the shell. Therefore the shell thickness will increase from the top to the bottom of the shell. If the shells are later enrobed this tendency is increased since the same takes place during the enrobing step.

Separation of the shells from the male moulds takes place e.g. by blowing air through small holes in the male mould. A problem in this teaching is that chocolate tends to clog the holes in the male mould so that essentially no air is being blown through the holes and the shells are consequently not separated from the male moulds. Another problem will arise if the majority of the holes are clogged and the air-pressure in the remaining open hole or holes is raised too much. Then the air-current may simply blast a hole in the bottom of the shells, which at this stage may not be completely set.

### Core of the invention

By the present invention a system is provided for the production of shells of confectionery masses in particular tempered chocolate like mass comprising at least one cooling member having a shape corresponding to the internal shape of the shell, means adapted to control the temperature of the at least one cooling member to below the solidification point of the mass, a vessel adapted to contain liquid confectionery mass, and means to control the up and down movement of the at least one cooling member into the liquid mass and up again through an orifice, further comprising scraping means along the periphery of the orifice adapted to scrape off excess mass.

Thereby is obtained the advantage that the shells while still being attached to the cooling member are provided with a pre-determined maximum shell thickness in their whole length. The advantage of this is savings in mass both in the moulding step and in a later enrobing step where the consumption of mass is proportional to the surface of the shell. Another advantage is that excess chocolate is removed more efficiently and more reproducibly than can be done by shaking the cooling members. Thereby, shells are obtained in which the mass has no tendency to flow down towards the bottom of the shell. Surprisingly, it turns out that the scraping of the outer surface of the shell does not release the shell from the cooling member, even though the inner surface of the shell may be completely solid at this stage. To the additional surprise of the skilled person there is no tendency for the mass on the cooling member to flow down towards the bottom after the cooling member with the attached and still partly liquid shell has passed through the orifice.

According to an especially preferred embodiment of the invention, the periphery of the orifice is arranged perpendicular to the up and down movement direction of the at least cooling member. Thereby is obtained not only a maximum shell thickness but also a well-defined surface on the whole outer vertical surface of the shell. Thereby shells can be produced that do not need a subsequent enrobing to cover its outside. The shells have an unprecedented quality of shells from mould-free systems.

By laying out the periphery of the orifice as scraping means with cutting edges especially precise finishing of the outside is provided.

Furthermore, the system may comprise means adapted to control the temperature of the periphery of the orifice to above the melting point of the mass. By doing this it is ensured that the scraped off mass does not accumulate at the periphery of the orifice but will simply drop down into the vessel with liquid mass again.

In addition, the system may be provided with a periphery of the orifice, which is radially movable. According to this embodiment it is possible to reduce the diameter of the orifice as the shell is lifted though the orifice. Thereby, shells of a completely uniform thickness can be produced as well as shells having a tapering surface.

The orifice may also be adapted to provide the shell with a pattern. This embodiment is especially useful when producing shells that will not be enrobed later.

According to an especially preferred embodiment, the system comprises cutting means adapted to cut excess mass from the bottom of the shell and to determine the bottom surface of the shell. By using this embodiment it is also possible to finish the bottom of the shell and to cut off the drops, which do not fall off by themselves. Surprisingly, it was determined that it was possible to make this cut in the still liquid outer part of the shell without destroying the shell or tearing it apart. The cutting means may be laid out in different ways as a piano string, which may be rotating and may be heated, knife means or even a laser beam.

The system may comprise means adapted to maintain an essentially constant level of liquid mass in the vessel. This provision ensures that shells of essentially uniform height are produced when the cooling members are lowered to the same point every time.

Preferably, the system comprises means adapted to control the temperature of the liquid mass in the vessel. By maintaining a constant temperature in the liquid mass a more constant shell thickness can be obtained in all cases due to the uniform viscosity. By furthermore equipping the vessel with means adapted to stir the liquid mass, a homogenous mass consistence and temperature is obtained, so that crystallisation in the liquid mass does not by chance proceed too far so as to produce clumps.

In a particularly preferred embodiment, the system comprises a tempering machine connected to the vessel via an inlet pipe and an outlet pipe to recycle the liquid chocolate-like mass and control the tempering of said mass. By thus recirculating the chocolate mass to a tempering machine, a constant temper of the mass can be obtained. The system may be equipped with feed-back control means to ensure a constant amount of desired cacao butter crystals in the mass.

According to a specially preferred embodiment of the invention the mass is a tempered chocolate like mass and the temperature of the at least one cooling member is between +10 and -30°C. With this temperature a rapid cooling of the shell takes place in direction from the cooling member and outwards into the mass. Thereby the system can work with short immersion times and increased productivity is the result.

Preferably, when the mass is a toffee mass, the temperature of the at least one cooling member is between +50 and +70°C. At this temperature the toffee mass adheres to the cooling member and solidifies under crystallisation from the cooling member and outwards into the mass. Short immersion times and high productivity can thus be obtained.

By providing the side of the at least one cooling member with an angle of at least 1.0° to the vertical rapid and efficient release of the shell from the cooling member is obtained.

According to an especially preferred embodiment of the invention the system comprises pushing means that are axially movable in relation to the at least one cooling member, said pushing means being adapted to release said shell from the cooling member. Thereby is ensured an automatic release of the shell from the cooling member. The shell is preferably released onto an automatically travelling conveyor band that will convey the shell to optional filling, enrobing and packaging section.

Preferably, the pushing means is adapted to engage with at least part of the upper rim of the shell. By applying the pressure force on the upper rim of the shell at the point of release from the cooling member is ensured that the release takes place with the least possible damage to the shell. If the pushing means engage the whole of the rim of the shell, a uniform pressure is exerted all the way around the shell and the shell is not damaged.

According to a special embodiment of the invention, the pushing means extend peripherally around the at least one cooling member and are adapted to determine the upper rim of the shell. According to this embodiment, the rim of the shell can be provided with a pattern, such as tongues, and as the pushing means engage the whole of the rim during the pushing operation, the delicate shell rim is protected from damage during this step.

Preferably, the system comprises means to control the horizontal movement of the cooling members in addition to the up and down movement. According to this embodiment, the cooling members are moved in a fully automatic system in an X and Y direction with stops at different stations such as the immersion station, the optional bottom finisher station, the covering station, and the release station.

Preferably the system comprises means adapted to keep the dew point of the atmosphere surrounding the cooling members below the temperature of the surface of the cooling members. By this provision it is ensured that no condensation of dew or ice takes place on the surface of the cooling members. This prevents the shells from sticking to the cooling members. Another effect of reducing the moisture content is to avoid microbiological growth as well as discoloration of the articles due to droplets of water on the articles.

### Detailed description

The invention is now described in more detail with reference to particularly preferred embodiments as well as the drawings.

### Figures

Fig 1 discloses a schematic drawing of a production line for producing optionally covered or enrobed articles.

Fig. 2 is a cross sectional schematic view of one embodiment of the system according to the invention.

Fig. 3 is a schematic cross sectional view of two embodiments of the cutting edges of the orifice.

Fig. 4 is a schematic cross sectional view of two embodiments of the pushing means.

Fig. 5 is a schematic horizontal cross section of a cooling member with associated chocolate shell and a plan view of two embodiments of the orifice.

Fig. 6 is a schematic cross sectional view of another embodiment of the cutting means.

Fig. 7 is a schematic cross sectional view of a cooling member, an associated shell and an embodiment of the pushing means.

Fig. 8 is a schematic cross sectional view of a cooling member according to the invention showing in particular the release angle of the cooling member.

Fig. 9 is a schematic cross sectional view of a cooling member with channels for cooling medium.

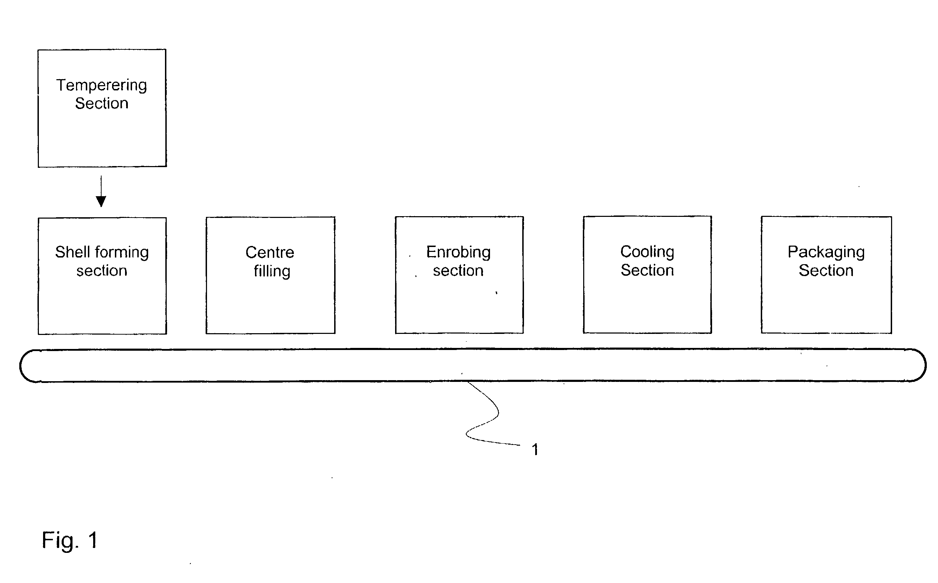

Steps to be performed for reaching a finished and packaged shell or enrobed article are schematically disclosed in fig. 1.

The shells from the mould-free moulding system according to the invention are delivered to a conveyor belt, which will convey them through the centre filling section, where the shells are filled with liquid, semi-liquid or solid centre filling, the enrobing section, the cooling section and the final packaging section. It should be mentioned that the number and type of sections can be changed and adjusted according to the nature of the finished product, which could be a shell, a covered shell, a filled shell or an enrobed article with a centre filling.

In the tempering section, the fat-containing, chocolate-like mass is normally tempered to a temperature of around 27-34°C having a content of stable β-crystals. However, the actual temperatures as well as contents of stable β crystals as well as the method of bringing about the desired condition in the mass depend on the choice of the skilled person for the chocolate-like mass in question. The tempered chocolate-like mass is delivered to the vessel 14.

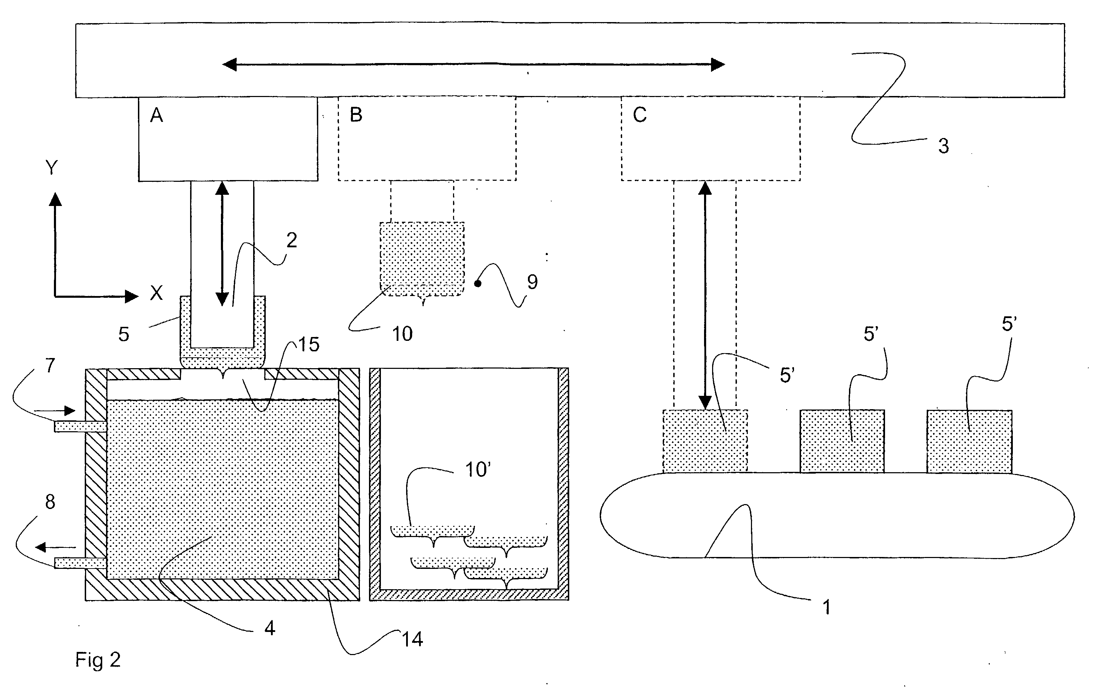

A first embodiment of the system is disclosed in Fig. 2. The system comprises many of cooling members 2, but for clarity only one is shown. The term cooling member is preferred to emphasise the cooling effect of the member on the mass although the invention encompasses heating of the member in the case of toffee mass. The cooling member may be cooled by various known means, such as by circulating through it a cooling medium. The temperature may be kept constant by having a constant temperature in the cooling medium or by feed back control from a thermoprobe located in the cooling channels or in the solid part of the cooling member. Cooling may also be obtained by various other means such as liquid or gaseous N₂ or solid state cooling such as Pelletier cooling. The cooling members may also be solid and be cooled by contact with a plate, which in turn is cooled by the flow of a cooling agent.

The cooling members are mounted to a holding system 3 which is capable of moving the cooling members in both a vertical and horizontal direction (in the X and Y direction of the system of co-ordinates in Fig. 2). The system comprises means to control the up and down movement of the cooling members in order to control the immersion depth into the liquid mass. These means could be electrically, hydraulically or pneumatically driven means or a servo. Preferable this means works at two speeds where the movement into the mass and through the orifice after immersion is performed at slow pace.

At station A, the cooling members are immersed into the liquid mass 4 which is stirred and maintained at an essentially constant temperature and at an essentially constant level in the vessel 14. Both stirring and temperature maintenance may be laid out in various different ways as long as an essentially constant temperature is obtained and as long as temperature and viscosity gradients are avoided in the liquid mass. In the case of chocolate-like mass, it is preferable to connect the system to a tempering machine (not shown) through channels 7 and 8.

The cooling member 2 is now lowered into the liquid mass as indicated by the up and down arrow at station A. It is kept for a predetermined time in the liquid mass whereby an amount of mass adheres to the cooling member. As the cooling member is lifted again it passes through the orifice 15 where excess mass is scraped from the outer still liquid side of the shell to provide the shell with a vertical outer surface/surfaces. The orifice may be placed in a plate as in figure 2 but it is likewise possible to imagine a network of holding means which keep the orifice in place between the cooling member in an upper position and the liquid mass in the vessel 14. The liquid mass, which is scraped off from the surface is returned to the vessel immediately, before it has had time to solidify.

After the cooling member has been lifted clear of the orifice 15 it is transported to station B in a horizontal movement whereby it passes over a rotating piano string 9. The time from lifting until cutting the bottom is typically 1-4 seconds. As the cooling member with the shell passes over/through the piano string, the excess mass 10 is cut off from the bottom, so that a horizontal bottom is produced. To facilitate the cutting operation and to keep the piano string clean, it may be rotated and it may also be heated by applying a voltage to the string. The cut off excess mass from the bottom is returned to another vessel, which is preferably not the same as vessel 14. At this point the mass in the bottom may have cooled to an extent where it contains a significant amount of crystals. In the case of chocolate mass this will have to be completely re-melted and tempered again before use.

At station C the cooling member is lowered to the conveyor belt 1 where the shell is released from the cooling member. The finished and released shells 5' and 5" continue on the conveyor band to the next sections of the moulding line.

According to an especially preferred embodiment of the invention the moulding tool with stations A, B and C according to Fig. 1 are placed in a semi-closed housing (not shown) in which low humidity is maintained by applying an overpressure of dehumidified air. It is important to ensure that the dew point of the air in the housing is below the temperature of the cooling member surface so that no condensation of dew or ice takes place on any of the surfaces.

It should be mentioned that an additional section B' may also be incorporated into the system. In this station the cooling member with the shell is lowered into a vessel containing a covering. The covering could comprise a number of ingredients but preferable the covering comprises dry particles of a size between 1 and 3 mm. Suitable coverings could be puffed rice, desiccated coconut, praliné (sugar pellets), chopped almonds, chopped nuts, small baked pellets and similar articles. As the outside of the shell at this point is not completely solid the covering will adhere to the shell and upon later complete solidification be glued to it's outside. Such a covering is not possible when shells are moulded in moulds. Another possibility is to provide the shell with another layer of mass in a different colour by immersing the cooling member with the shell into another vessel with a differently coloured mass. In this way a shell can be produced having an interior of dark chocolate and an outer surface of milk chocolate or vice versa or a shell where the outer mass only covers part of the shell by having different immersion depths in the two vessels. Another possibility is to let the orifice in the second immersion step areawise scrape off the second mass completely so that the exterior of the shells shows a two-coloured pattern.

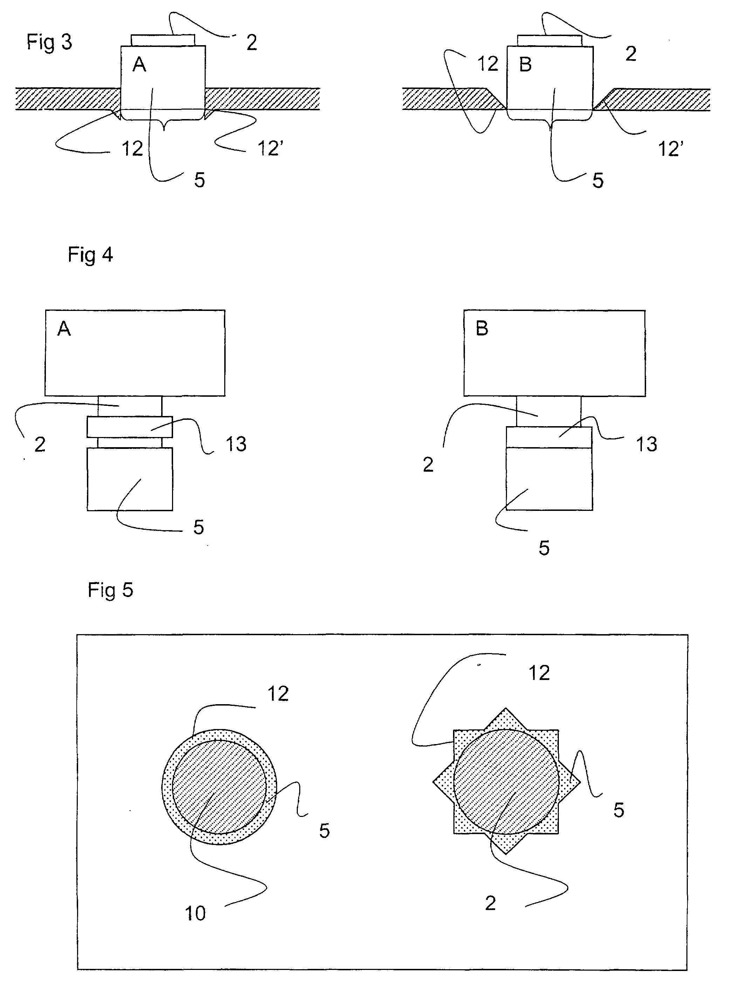

In Fig. 3 different embodiments of the scraping means 12, 12' of the orifice are shown. The scraping means may be laid out as in A whereby the cutting edge points downward and the scraped off mass is removed from the shell by the scraping means or they may be laid out as in B where the angle of the cutting edge should be between 15 and 75°. A cutting angle of 45° has been found to work especially excellent.

It is also conceivable that the cooling members could be rotated during the lifting and scraping operation. If the orifice is at the same time provided with protrusions, this will provide the shell with a helix pattern.

To facilitate the release of the shell from the cooling member the system may be provided with release means as shown in Fig 4. At station A, the release means 13 is not in contact with the chocolate shell 5 which still adheres to the cooling member. At station B, the release means 13 is lowered until it engages the upper rim of the shell 5 and gently pushes if free from the cooling member. By gently pushing the rim of the shell, the necessary pressure force is applied to the article at the point of it's highest strength. As the pressure force moreover is uniform all way round the cooling member the delicate rim is not destroyed by the release action. In an industrial process it is of utmost importance that this release process works perfectly, since the non-release of a single shell from a moulding plate which may comprise 100 cooling members will bring about a production stop until the shell has been removed manually and the cooling member cleaned accordingly. It should be mentioned that the release means do not have to extend peripherally around the upper part of the cooling member. The release means may engage the shell rim only at discrete points of the rim or the release means may be integrated into the cooling member and exert it's pushing effect on the bottom of the shell. Although these are possible options it has been found preferable to let the release means engage the rim of the shell, this being the strongest part of the shell.

As demonstrated by the above examples, it is necessary that the shell has solidified to a certain extent before release from the cooling member, this time being defined primarily by the temperature of the cooling member, the type of chocolate mass and its viscosity. The time may vary from one to two seconds up to a minute.

Fig. 5 discloses different embodiments of the orifice. On the left is a circular orifice surrounding a cooling member with a circular cross section. Thereby a shell with a cylindrical outer face is produced. On the right is a similar cooling member with an orifice in the shape of a star. This embodiment ensures the production of shells having a pattern on the outside. It is conceivable that the shapes are also vice versa with a patterned cooling member and a circular orifice. It is likewise conceivable that a moulding plate may comprise cooling members of different geometry and be associated with orifices with different geometries so that in one operation different shells are produced. Similarly the system may comprise different vessels with different masses so that differently coloured shells may be produced in one operation. The combination of different shapes and different masses may also be applied.

The diameter of the orifice may be made variable for instance by laying out the orifice as a variable diaphragm. The diameter of the orifice can be controlled according to the immersion depth of the cooling member and thereby a shell with a tapering outside may be produced.

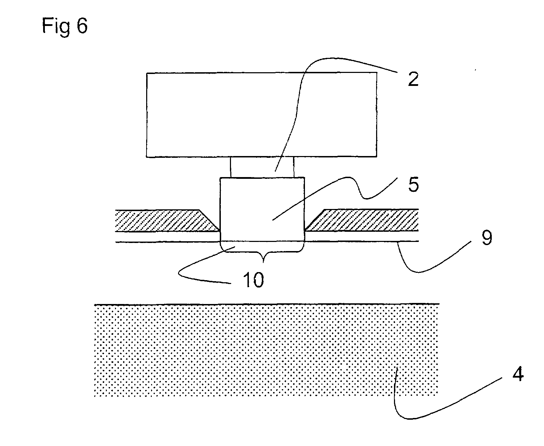

Another embodiment of the bottom cutting means 9 is disclosed in Fig. 6. Here the bottom cutting means 9 is placed between the liquid mass 4 in the vessel and the means with the orifice. As the cooling member 2 with the shell 5 is lifted clear of the mass and the sides are scraped by the edges of the orifice at some point the cooling members come to a stand still during which the bottom 10 is cut off by the cutting means 9. By cutting the bottom at this point the mass can be returned directly to the vessel and be re-used for moulding the next set of shells.

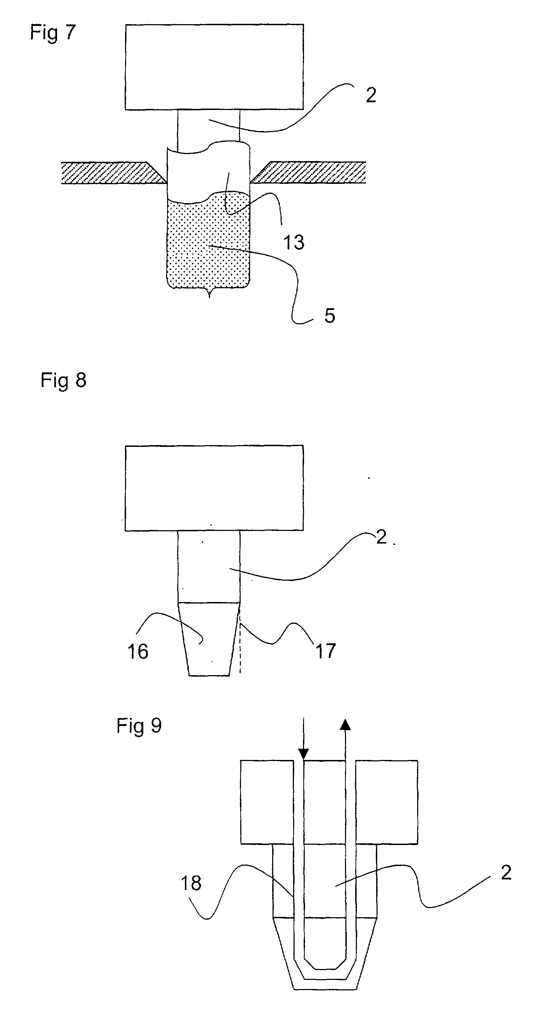

In Fig. 7 a special embodiment of the pushing means is disclosed. According to this embodiment the pushing means 13 is not simply horizontal but is provided with a pattern such as a tongue-pattern. During immersion, both the cooling member 2 and the lower part of the pushing means 13 is immersed into the liquid mass. As the cooling member is lifted again, the orifice scrapes the pushing means free of any mass and scrapes the outer surface of the shell 5 to a predetermined shape. When the shell is later delivered to the conveyor belt the pushing means has exactly the same shape as the rim of the shell 5 and the shell can be released without any damage to the shell rim.

The cooling members are preferably manufactured from metal, and more preferably form a material having a high heat conductivity and heat capacity such as aluminium, copper or silver. Especially efficient heat conductivity is obtained with cooling members made from copper with a covering of silver.

### Examples

1) A chocolate shell was moulded from a tempered liquid milk-chocolate mass using a copper cooling member having a diameter of 30 mm and cooled to -14°C. The cooling member was immersed for 1.5 seconds into the mass. Shortly after lifting through the orifice, having a diameter of 32 mm, the bottom was cut by use of a non rotating piano string. Immediately after this step it was possible to release the shell from the cooling member using a peripherally extending release means engaging the whole rim of the shell. The release means had an outer diameter of 40. mm and thus were 5 mm thick.
2) With a similar tool and using similar process parameters a thin shell was produced from chewing gum mass.
3) A number of shells were moulded with the above mentioned tool according to the invention, using a thick light chocolate mass and the following process parameters:

| Temperature | Immersion time | Time before bottom finishing | Time before release | Comments |
|---|---|---|---|---|
| +10°C | 5-40 sec | | | The mass does not adhere to the cooling member |
| +7°C | 15 sec | 2-3 sec | 30 sec | |
| +5°C | 8 sec | 2-3 sec | 15 sec | |
| 0°C | 3.5 sec | 2-3 sec | 10 sec | |
| - 5°C | 1.5 sec | 2-3 sec | 8 sec | |
| -10°C | 0.8 sec | 2-3 sec | 5 sec | |
| -15°C | 0.6 sec | 2-3 sec | 4 sec | |

Shorter immersion times as well as shorter times between lifting and release of the shell from the cooling member can be expected with dark chocolate types and also with more liquid chocolate types. With still lower temperatures a shortening especially of the time until release is expected.
4) A number of shells were also produced with a tool without an orifice. The chocolate mass and the cooling member were as above.

| Temperature | Immersion time | Time before bottom finishing | Time before release | Comments |
|---|---|---|---|---|
| +10°C | 10 sec | 2-3 sec | 30 sec | |
| +5°C | 2.5 sec | 2-3 sec | 15 sec | |
| 0°C | 1.2 sec | 2-3 sec | 10 sec | |
| -5°C | 0.8 sec | 2-3 sec | 5 sec | |
| -10°C | 0.8 sec | 2-3 sec | 5 sec | |
| -15°C | 0.8 sec | 2-3 sec | 4 sec | |

Shells could also be produced according to this method without an orifice, but the geometry of the shells was not as good as the geometry of shells produced according to the invention. All the shells produced without the orifice were thicker at the bottom than at the top.

## Claims

1. A system for the production of shells of confectionery mass in particular tempered chocolate like mass comprising
at least one cooling member (2) having a shape corresponding to the internal shape of the shell (5),
means adapted to control the temperature of the at least one cooling member (2) to below the solidification point of the mass,
a vessel (14) adapted to contain liquid confectionery mass (4),
and means to control the up and down movement of the at least one cooling member (2) into the liquid mass (4) and up again through an orifice (15), further comprising scraping means (12, 12') along the periphery of the orifice (15) adapted to scrape off excess mass (10).

2. A system according to claim 1, whereby the periphery of the orifice (15) is arranged perpendicular to the up and down movement direction of the at least one cooling member (2).

3. A system according to claim 1, further comprising means adapted to control the temperature of the periphery of the orifice (15) to above the melting point of the mass.

4. A system according to claim 1, comprising means which provide that the periphery of the orifice (15) is radially movable.

5. A system according to claim 1, whereby the orifice (15) is adapted to provide the shell (5) with a pattern.

6. A system according to claim 1, comprising cutting means (9) adapted to cut excess mass from the bottom (10) of the shell (5) and to determine the bottom surface of the shell (5).

7. A system according to claim 1, comprising means adapted to control the temperature of the liquid mass (4) in the vessel (14).

8. A system according to claim 1, comprising means adapted to maintain an essentially constant level of liquid mass (4) in the vessel (14).

9. A system according to claim 1, comprising means adapted to stir the liquid mass.

10. A system according to claim 1, comprising a tempering machine connected to the vessel (14) via an inlet pipe (7) and an outlet pipe (8) to recycle the liquid chocolate-like mass (4) and control the tempering of said mass.

11. A system according to claim 1, whereby the mass is a tempered chocolate like mass and the temperature of the at least one cooling member (2) is between +10 and -30°C.

12. A system according to claim 1, whereby the mass is a toffee mass and the temperature of the at least one cooling member (2) is between +50 and +70°C.

13. A system according to claim 1, whereby the side of the at least one cooling member (2) has an angle of at least 1.0° to the vertical.

14. A system according to claim 1, comprising pushing means (13) that are axially movable in relation to the at least one cooling member (2), said pushing means being adapted to release said shell (5) from the cooling member (2).

15. A system according to claim 14, whereby said pushing means (13) is adapted to engage with at least part of the upper rim of the shell (5).

16. A system according to claim 14 or 15, whereby said pushing means (13) extend peripherally around the at least one cooling member (2) and are adapted to determine the upper rim of the shell (5).

17. A system according to claim 1, comprising means to control the horizontal movement of the cooling members (2).

18. A system according to claim 1, comprising means adapted to keep the dewpoint of the atmosphere surrounding the cooling members below the temperature of the surface of the cooling members (2).

## Patentansprüche

1. System zur Herstellung von Schalen aus Süsswarenmasse insbesondere eine temperierte schokoladenähnliche Masse umfassend
mindestens ein Kühlelement (2), die eine Form hat, die der Innenform der Schale (5) entspricht,
Mittel dazu ausgelegt, die Temperatur von dem mindestens einen Kühlelement (2) bis zu unterhalb des Erstarrungspunktes der Masse zu kontrollieren,
ein Behälter (14), der dazu ausgelegt ist, flüssige Süsswarenmasse (4) zu enthalten,
und Mittel zur Kontrolle der auf und ab Bewegung von dem mindestens einen Kühlelement (2) in die flüssige Masse (4) und wieder nach oben durch eine Öffnung (15),
ferner umfassend Schabermittel (12, 12') längs der Peripherie der Öffnung (15) zur Abstreifung der überschüssigen Masse (10).

2. System nach Anspruch 1, in welchem die Peripherie der Öffnung (15) perpendikulär im Verhältnis zu der Richtung der auf und ab Bewegung von dem mindestens einen Kühlelement (2) arrangiert ist.

3. System nach Anspruch 1, ferner umfassend Mittel zur Kontrolle von der Temperatur der Peripherie von der Öffnung (15) bis zu oberhalb des Schmelzpunktes der Masse ausgelegt.

4. System nach Anspruch 1, ferner umfassend Mittel dafür sorgend, dass die Peripherie der Öffnung (15) radiär beweglich ist.

5. System nach Anspruch 1, in welchem die Öffnung (15) dazu ausgelegt ist, die Schale (5) mit einem Muster zu versehen.

6. System nach Anspruch 1, umfassend eine Abschneidevorrichtung (9), die dazu ausgelegt ist, überschüssige Masse vom Boden (10) der Schale (5) abzuschneiden und die Bodenoberfläche der Schale (5) zu bestimmen.

7. System nach Anspruch 1, umfassend Mittel zur Kontrolle von der Temperatur der flüssigen Masse (4) im Behälter (14) ausgelegt.

8. System nach Anspruch 1, umfassend Mittel dazu ausgelegt, ein grundlegend konstantes Niveau von der flüssigen Masse (4) im Behälter (14) zu erhalten.

9. System nach Anspruch 1, umfassend Mittel dazu ausgelegt, die flüssige Masse zu rühren.

10. System nach Anspruch 1, das eine Temperiermaschine aufweist, die am Behälter (14) über ein Eingangsrohr (7) und ein Ausgangsrohr (8) verbunden ist, um die flüssige schokoladenähnliche Masse (4) wiederzuverwenden und die Temperierung genannter Masse zu kontrollieren.

11. System nach Anspruch 1, in welchem die Masse eine temperierte schokoladenähnliche Masse ist, und die Temperatur von dem mindestens einen Kühlelement (2) zwischen +10 und -30°C ist.

12. System nach Anspruch 1, in welchem die Masse eine Toffee Masse ist, und die Temperatur von dem mindestens einen Kühlelement (2) zwischen +50 und +70°C ist.

13. System nach Anspruch 1, in welchem die Seite von dem mindestens einen Kühlelement (2) ein Winkel von mindestens 1.0° im Verhältnis zu der vertikalen Achse hat.

14. System nach Anspruch 1, umfassend Schubvorrichtung (13), die axial im Verhältnis zu dem mindestens einen Kühlelement (2) beweglich ist, genannte Schubvorrichtung dazu ausgelegt, genannte Schale (5) von dem Kühlelement (2) zu lösen.

15. System nach Anspruch 14, in welchem genannte Schubvorrichtung (13) dazu ausgelegt ist, mit mindestens einem Teil von dem oberen Rand der Schale (5) einzugreifen.

16. System nach 14 oder 15, in welchem genannte Schubvorrichtung (13) sich über die Strecke um den Aussenumfang von dem mindestens einen Kühlelement (2) herum erstreckt und dafür ausgelegt ist, den oberen Rand der Schale (5) zu bestimmen.

17. System nach Anspruch 1, umfassend Mittel zur Kontrolle der horizontalen Bewegung der Kühlelemente (2).

18. System nach Anspruch 1, umfassend Mittel dazu ausgelegt, den Taupunkt der Atmosphäre, die die Kühlelemente umgibt, unterhalb der Temperatur von der Oberfläche der Kühlelemente (2) zu halten.

## Revendications

1. Système pour la production de coquilles en masse de confiserie, en particulier une masse chauffée de type chocolat, comprenant
au moins un élément de refroidissement (2) ayant une forme correspondant à la forme interne de la coquille (5),
des moyens adaptés pour contrôler la température du au moins un élément de refroidissement (2) jusqu'à au-dessous du point de solidification de la masse,
un réservoir (14) adapté pour contenir de la masse de confiserie liquide (4),
et des moyens pour commander le mouvement de montée et de descente du au moins un élément de refroidissement (2) dans la masse liquide (4) et en haut par un orifice(15),
de plus comprenant des moyens de raclage (12, 12') au long de la périphérie de l'orifice (15) adaptés pour racler la masse de surplus (10).

2. Un système selon la revendication 1, dans lequel la périphérie de l'orifice (15) est arrangé perpendiculairement à la direction du mouvement de montée et de descente du au moins un élément de refroidissement (2).

3. Un système selon la revendication 1, de plus comprenant des moyens adaptés pour contrôler la température de la périphérie de l'orifice (15) jusqu'à au-dessus du point de fusion de la masse.

4. Un système selon la revendication 1, de plus comprenant des moyens prendrant soin que la périphérie de l'orifice (15) soit radialement mouvante.

5. Un système selon la revendication 1, dans lequel l'orifice (15) est adapté pour pourvoir la coquille (5) d'un dessin.

6. Un système selon la revendication 1, comprenant des moyens de coupage (9) adaptés pour couper la masse de surplus du fond (10) de la coquille (5) et pour déterminer la surface du fond de la coquille (5).

7. Un système selon la revendication 1, comprenant des moyens adaptés pour contrôler la température de la masse liquide (4) dans le réservoir (14).

8. Un système selon la revendication 1, comprenant des moyens adaptés pour maintenir un niveau essentiellement constant de masse liquide (4) dans le réservoir (14).

9. Un système selon la revendication 1, comprenant des moyens adaptés pour agiter la masse liquide.

10. Un système selon la revendication 1, comprenant une tempéreuse connectée au réservoir (14) par un conduit d'entrée (7) et un conduit de sortie (8) pour recycler la masse liquide de type chocolat (4) et pour contrôler le tempérage de ladite masse.

11. Un système selon la revendication 1, dans lequel la masse est une masse chauffée de type chocolat et la température du au moins un élément de refroidissement (2) est entre +10 et -30°C.

12. Un système selon la revendication 1, dans lequel la masse est une masse de toffee et la température du au moins un élément de refroidissement (2) est entre +50 et +70°C.

13. Un système selon la revendication 1, dans lequel le côté du au moins un élément de refroidissement (2) fait un angle d'au moins 1.0° avec le vertical.

14. Un système selon la revendication 1, comprenant des moyens pousseurs (13) qui sont axialement mobiles par rapport du au moins un élément de refroidissement (2), lesdits moyens pousseurs étant adaptés pour dégager ladite coquille (5) de l'élément de refroidissement (2).

15. Un système selon la revendication 14, dans lequel lesdits moyens pousseurs (13) sont adaptés pour s'engrener avec au moins une partie du bord supérieur de la coquille (5).

16. Un système selon la revendication 14 ou 15, dans lequel lesdits moyens pousseurs (13) s'étendent sur la périphérie autour du au moins un élément de refroidissement (2) et sont adaptés pour déterminer le bord supérieur de la coquille (5).

17. Un système selon la revendication 1, comprenant des moyens pour commander le mouvement horizontal des éléments de refroidissement (2).

18. Un système selon la revendication 1, comprenant des moyens adaptés pour tenir le point de rosée de l'atmosphère entourant les éléments de refroidissement au-dessous de la température de la surface des éléments de refroidissement (2).
